# EUROPEAN PATENT APPLICATION

(11) **EP 4 734 072 A1**
(43) Date of publication of application: **29.04.2026**
(21) Application number: 24208370.7
(22) Date of filing: 23.10.2024
(51) Int. Cl.: G06V 10/25, G06V 10/778, G06V 10/82, G06V 20/56

(54) **METHOD AND SYSTEM FOR ACTIVE LEARNING IN AUTOMATED VEHICLES BASED ON FRAME SCORES**

(71) Applicant: Bayerische Motoren Werke Aktiengesellschaft, 80809 München (DE)
(72) Inventor: Schmidt, Michael, 85386 Eching (DE); Bauerschmidt, Philipp, 80935 München (DE); Slooten, Tim, 85375 Neufahrn b. Freising (DE)

(57) **Abstract**

The present disclosure relates to enabling active learning for object classification by an automotive vision system configured to perform visual perception tasks, based on which a vehicle is configured to perform at least one driving automation system feature. The automotive vision system determines one or more 3D bounding boxes and a corresponding object class within three-dimensional sets of automotive sensor data, which including at least one automotive camera frame, i.e. two-dimensional data, while a secondary vision system determines one or more 2D bounding box vectors for each automotive camera frame. Based at least on the one or more 2D bounding box vectors, a frame score is calculated for each automotive camera frame. Then, one or more automotive camera frames are provided to an oracle based on the corresponding frame scores. The oracle returns annotated camera frames, which may then be used to retrain the automotive vision system.

## Description

### TECHNICAL FIELD

The invention generally relates to active learning and more precisely to active learning in the context of perception tasks in vehicles configured to perform at least one driving automation system feature.

### BACKGROUND

To enable the performance of at least one driving automation system feature, a vehicle needs to accurately perform visual perception tasks, such as object classification, object detection or semantic segmentation. These visual perception tasks are usually performed by machine learning algorithms, which need to be trained on large datasets and may be further improved even once the vehicle is deployed in traffic. One way of ensuring accurate performance of automotive perception tasks by the machine learning algorithms is to train the machine learning algorithms with large, labeled datasets, i.e. datasets which indicate the outcome of the respective visual perception task. However, since such labeling may be performed manually, large, labeled datasets to train machine learning algorithms for at least partial driving automation may be costly to generate. To overcome this issue, active learning may be used, i.e. a given machine learning algorithm may be inferenced on unlabeled data and may request that a subset of the unlabeled data be labeled based on active learning criteria. However, the active learning criteria need to generally be determined in a way which improves a given machine learning algorithm and in the context of driving automation system features need to enable achieving the level of accuracy of a machine learning algorithm required for safe performance of the driving automation system features.

It is therefore an objective of the present disclosure to provide active learning criteria which enable the training and improvement of a machine learning algorithm configured to perform an automotive perception task in a manner ensuring the accuracy required to perform at least one driving automation system feature.

### SUMMARY OF THE INVENTION

To achieve this objective, the present disclosure provides a method configured to enable active learning for object classification by an automotive vision system configured to perform visual perception tasks in a vehicle configured to perform at least one driving automation system feature based on the object classification, comprises: determining, using the automotive vision system, for one or more data points within a set of automotive sensor data, including at least one automotive camera frame, one or more 3D bounding boxes and a corresponding object class of a first plurality of object classes for each 3D bounding box, determining, for each automotive camera frame, one or more 2D bounding box vectors using a secondary vision system, each 2D bounding box vector being indicative of a 2D bounding box within a corresponding automotive camera frame and a corresponding object class of a second plurality of object classes of the 2D bounding box, calculating, for each automotive camera frame, a frame score based at least on the one or more 2D bounding box vectors, providing one or more automotive camera frames to an oracle based on the corresponding frame scores, and receiving, from the oracle, an object annotation of the one or more automotive camera frames, the object annotation being configured to enable retraining of the automotive vision system.

The present disclosure further provides a corresponding automotive control unit and a vehicle comprising the automotive control unit.

### BRIEF DESCRIPTION OF THE DRAWINGS

Examples of the present disclosure will be described with reference to the following appended drawings, in which like reference signs refer to like elements.
Figs. 1A and 1B show a flowchart of a method configured to enable active learning for object classification by an object detector and classifier configured to perform visual perception tasks in a vehicle configured to perform at least one driving automation system feature based on the object classification according to examples of the present disclosure.
Fig. 2 illustrates an automotive vision system according to examples of the present disclosure.
Fig. 3 illustrates a secondary vision system, a semantic embedding encoder and the interaction therebetween in order to obtain annotated automotive camera frames in accordance with the method of Fig. 1 according to examples of the present disclosure.
Fig. 4 illustrates a vehicle according to examples of the present disclosure.
Fig. 5 illustrates an automotive control unit according to examples of the present disclosure.
Fig. 6 illustrates a data center processing unit according to examples of the present disclosure.

It should be understood that the above-identified drawings are in no way meant to limit the present disclosure. Rather, these drawings are provided to assist in understanding the present disclosure. The person skilled in the art will readily understand that aspects of the present invention shown in one drawing may be combined with aspects in another drawing or may be omitted without departing from the scope of the present disclosure.

### DETAILED DESCRIPTION

The present disclosure provides an approach to enabling active learning for an automotive vision system. The automotive vision system performs visual perception tasks in sets of automotive sensor data, i.e. data clouds comprising three-dimensional data from various automotive sensors of data. Accordingly, the automotive vision system performs the visual perception tasks on three-dimensional data and thus determines 3D bounding boxes of objects determined in a driving environment. Typical active learning approaches for the automotive vision system would thus select three-dimensional data for annotation based on the 3D bounding boxes output by the automotive vision system. By contrast, the present disclosure provides an active learning approach which selects two-dimensional data included in the three-dimensional data for annotation, i.e. automotive camera frames, based on 2D bounding boxes of a secondary vision system. To this end, a frame score is calculated for each automotive camera frame included in the sets of automotive sensor data based on the output of the secondary vision system, i.e. based on 2D bounding box vectors. Each frame score may be calculated directly based on the 2D bounding box vectors or may be calculated based on the output of a semantic embedding encoder, which has received at least the 2D bounding box vectors as input.

Selecting automotive sensor data to be annotated in order to retrain an automotive vision system based on an output of a secondary vision system may serve a variety of purposes. First, the object classes which the secondary vision system may be configured to identify may be selected in order to determine a focus of the active learning selection, e.g. on a subset of object classes or based on a more fine-grained object detection for a specific group of objects, such as vulnerable road users (VRUs). That is, the secondary vision system may e.g. be able to differentiate between different types of pedestrians, such as children, adults, wheelchair users and senior citizens while the automotive vision system may only be able to generally identify pedestrians. Second, the processing effort required for the active learning selection may be reduced by selecting automotive sensor data to be annotated based on a secondary vision system processing two-dimensional data in order to retrain an automotive vision system processing three-dimensional data.

In summary, the active learning approach provided by the present disclosure is based on calculating frame scores for automotive camera frames, i.e. two-dimensional data, in order to obtain annotated data configured to train an automotive vision system performing visual perception tasks on three-dimensional data. The frame scores are calculated at least based on the output of a secondary vision system and may further be calculated based on the output of a semantic embedding encoder.

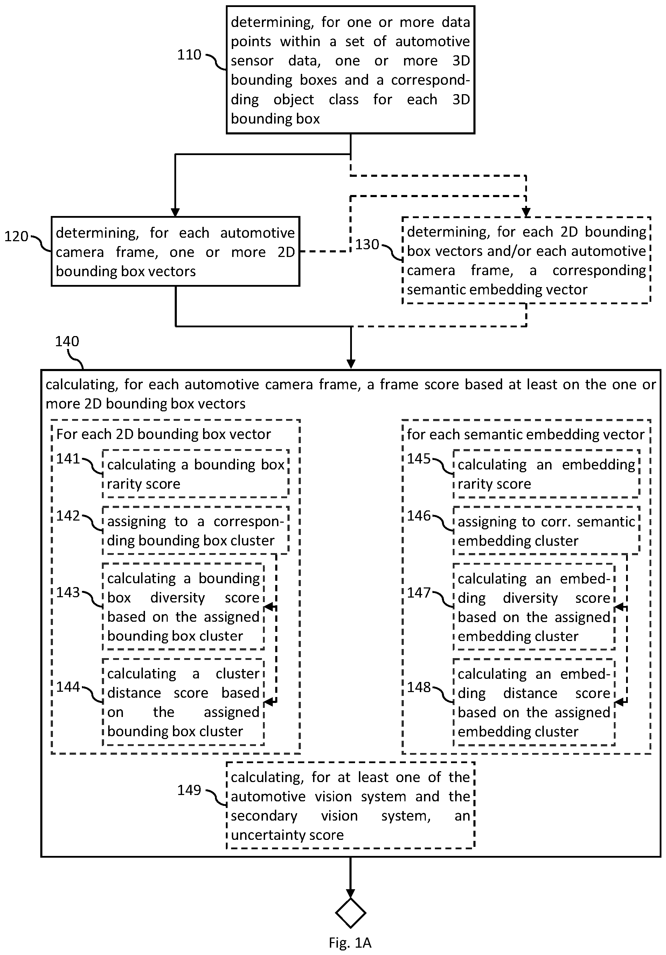

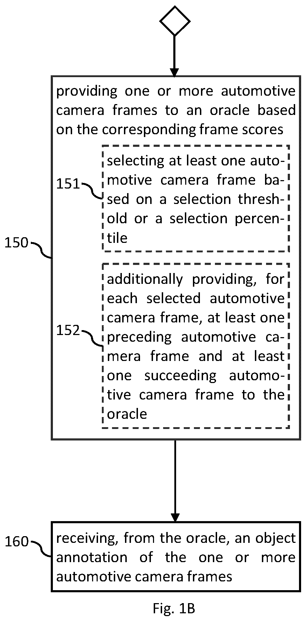

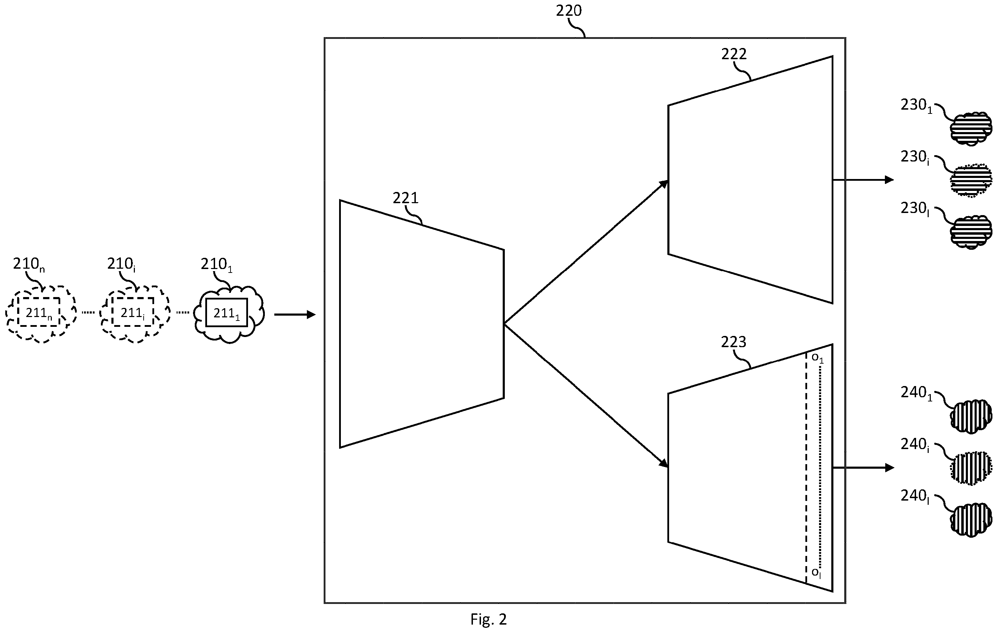

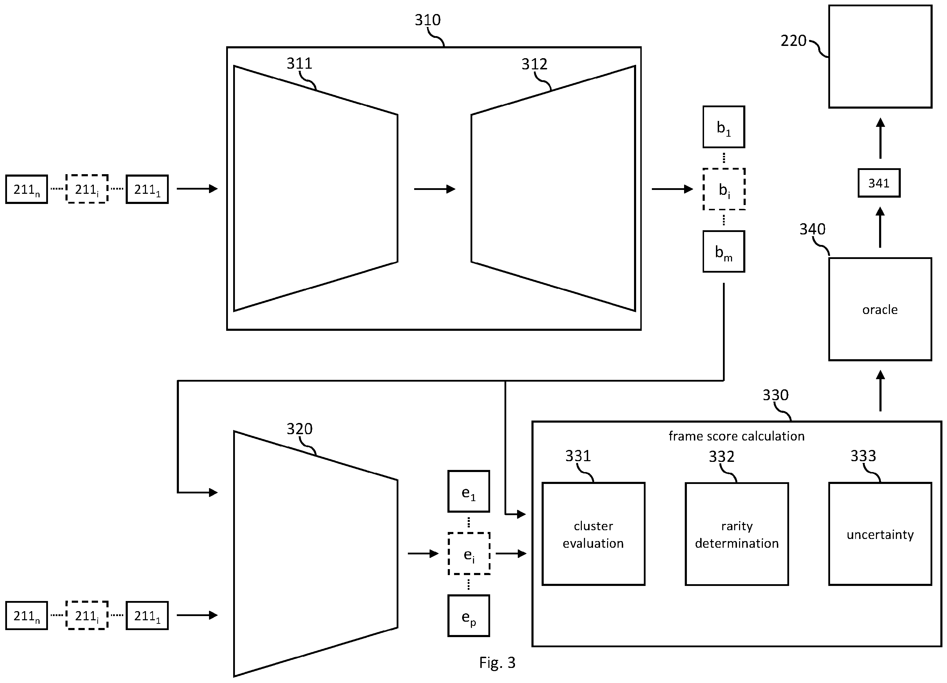

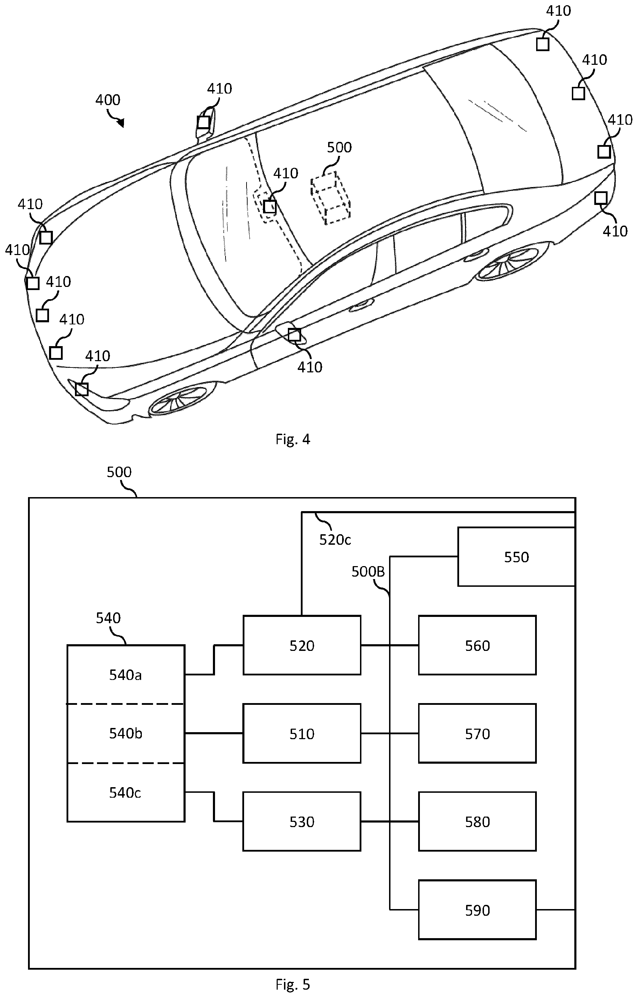

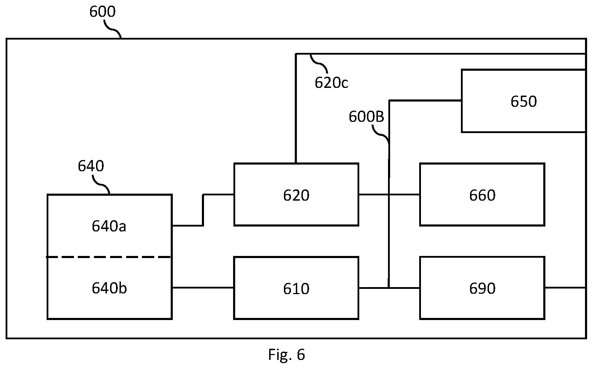

This general concept will be explained with reference to the appended drawings, with Figs. 1A and 1B providing a flowchart of a method 100 configured to enable active learning for object classification by an automotive vision system configured to perform visual perception tasks in a vehicle configured to perform at least one driving automation system feature based on the object classification. Fig. 2 shows an example automotive vision system 220. Fig. 3 shows a secondary vision system 310, a semantic embedding encoder 320 and various aspects of frame score calculation 330 in accordance with method 100. In addition, Fig. 4 illustrates a vehicle according to the present disclosure, Fig. 5 illustrates an automotive controller configured to perform method 100 and Fig. 6 illustrates a data center processing unit configured to perform at least aspects of method 100 in some examples of the present disclosure.

It will be understood that dashed boxes in Figs. 1A and 1B illustrate optional method steps and that dashed lines illustrate optional paths between boxes. Further, it will be understood that adjacent boxes are not to be understood as implying that the corresponding method steps are to be performed in parallel. Rather, the steps of method 100 as illustrated in Figs. 1A and 1B may be performed in any order, taking into account any data dependencies between the various steps.

Method 100 is configured to enable active learning for object classification by an automotive vision system, such as automotive vision system 220, configured to perform visual perception tasks in a vehicle, such as vehicle 400 of Fig. 4, configured to perform at least one driving automation system feature based on the object classification.

In the context of the present disclosure, active learning is to be understood to refer to the selection of unannotated automotive camera frames for object annotation and subsequent training of the automotive vision system with the annotated automotive camera frames.

Vehicle 400 in the context of the present disclosure refers to any kind of motor vehicle configured to transport people and/or cargo. The motor of vehicle 400 may be any kind of motor, such as an electric motor or an internal combustion engine. Vehicle 400 may e.g. be a passenger vehicle. It will however be understood that vehicle 400 may also be a bus, a truck or any other kind of vehicle including one or more automotive sensors 410 and an automotive control unit 500 enabling vehicle 400 to provide at least one driving automation system feature.

In the context of the present disclosure, driving automation system feature is to be understood in the sense of standard J3016 of SAE International as design-specific functionality of a driving automation system at a given level of driving automation, i.e. any one of levels 1 to 5 of driving automation as defined in the taxonomy of driving automation of standard J3016. For example, the driving automation system feature may be a level 1 lane centering functionality or a level 3 traffic jam assistant on controlled-access highways, i.e. a functionality controlling the longitudinal and lateral motion of vehicle 400 up to a predefined speed on controlled-access highways.

Vehicle 400 and thereby automotive control unit 500 and one or more sensors 410 are configured to perform at least one driving automation system feature. In this context, method 100 ensures the reliability of visual perception tasks performed by automotive vision system 220, which provide the environmental awareness required for the performance of the at least one driving automation system feature by automotive control unit 400.

The one or more automotive sensors 410 may be configured to capture automotive sensor data indicative of a driving environment of vehicle 400, which may provide the environmental awareness enabling the at least one driving automation system feature. For example, the one or more automotive sensors 410 may provide vehicle 400 with information on the position and size of other vehicles or with information regarding road surface markings, which are extracted from the automotive sensor data based on the object classification performed by the automotive vision system. To this end, the one or more automotive sensors 410 may be radar sensors, which may be configured to emit radio waves in order to determine a distance, an angle and a velocity of objects around the vehicle based on the reflected radio waves. The one or more sensors 410 may be light detection and ranging (LIDAR) sensors, which are configured to emit laser beams in order to determine a distance, an angle and a velocity of objects around vehicle 400 based on the reflected laser beams. The one or more sensors 410 may be cameras, which are configured to capture images of the environment of the vehicle. The one or more sensors 410 may be thermographic cameras, which are configured to capture images of the environment of vehicle 400 based on infrared radiation. It will be understood that LIDAR sensors, radar sensors or cameras are merely provided as examples of sensor types of the one or more sensors 410. For example, the one or more sensors 410 may also be ultrasonic sensors. More generally, the one or more automotive sensors 410 may be any type of sensor capable of capturing automotive sensor data indicative of the driving environment of vehicle 400. It will further be understood that the one or more automotive sensors 410 may include multiple sensors of various types of sensors. Further, the one or more automotive sensors 410 of the same type may exhibit different properties, e.g. by being configured to capture sensor data at different ranges, such as a close range, a middle range and a far range. For example, vehicle 400 may include three close range radar sensors each at a front and a back of vehicle 400, a middle range to far range radar sensor at the back of vehicle 400, a LIDAR sensor at the front of vehicle 400, a rear-facing camera at the back of vehicle 400, a front-facing camera at the front of the vehicle, a front-facing camera at the rear-view mirror and a rear-facing close range to middle range radar sensor in each door-mounted outer rear view mirror. It will be understood that vehicle 400 may include more or fewer automotive sensors than shown in Fig.4 and discussed in the above example.

In view of the various types of automotive sensors discussed above, it will be understood that automotive sensor data in the sense of the present application may be any kind of data, such as an automotive camera frame, a data cloud or any other type of data structure suitable to include data from one or more of automotive sensors 410 and to thereby convey information indicative of the driving environment of vehicle 400. Further, automotive sensor data received at a given capture time is referred to in the present disclosure as a set of automotive sensor data. That is, a set of automotive sensor data refers to automotive sensor data captured by one or more automotive sensors 410 at approximately the same time. Since automotive sensors 410 are configured to capture automotive sensor data continuously or at discrete time intervals, the automotive sensor data is provided by automotive sensors 410 as a plurality of automotive sensor data, which may also be referred to as a stream of automotive sensor data or simply as automotive sensor data.

Since a set of automotive sensor data may include automotive sensor captured by one or more automotive sensors 410, each set of automotive sensor data 410 may include three-dimensional data, either due to one of the automotive sensors 410 capturing three-dimensional data or due to the combination of two-dimensional data captured by multiple automotive sensors 410 forming a three-dimensional space.

It will be understood that three-dimensional data and two-dimensional data refer to automotive sensor data being indicative of the spatial dimensions of the driving environment of vehicle 400, i.e. either two or three of the spatial dimensions of the driving environment of vehicle 400. In other words, both three-dimensional data and two-dimensional data may be of higher dimensionality by including additional sensor parameters, such as reflectivity values or color values but are only referred to throughout the present disclosure in terms of the dimensions of the driving environment of vehicle 400 of which the respective automotive sensor data is indicative. For example, the sets of automotive sensor data may include 6DOF spatial information. The same principle applies to 3D and 2D bounding boxes.

The automotive sensor data are illustrated in Fig. 2 as sets of automotive sensor data 210₁ to 210ₙ in the form of a three-dimensional data point cloud. Further, Fig. 2 highlights the fact that each set of automotive sensor data 210₁ to 210ₙ includes at least one corresponding automotive camera frame 211₁ to 211ₙ, i.e. each three-dimensional set of automotive sensor data 210₁ to 210ₙ includes at least one set of two-dimensional data. The indices of sets of automotive sensor data 210₁ to 210ₙ and corresponding automotive camera frames 211₁ to 211ₙ indicate the respective time instance at which automotive sensor data 210₁ to 210ₙ and corresponding automotive camera frames 211₁ to 211ₙ are captured, with the index i indicating that automotive sensor data 210₁ to 210ₙ and corresponding automotive camera frames 211₁ to 211, are captured by one or more automotive sensors 410 continuously at discrete time intervals during operation of vehicle 400.

It will be understood that sets of automotive sensor data 210₁ to 210ₙ include at least one corresponding automotive camera frame 211₁ to 211ₙ, which may subsequently be provided to an oracle for annotation. That is, sets of automotive sensor data 210₁ to 210ₙ may include more than one corresponding automotive camera frame, e.g. one corresponding automotive camera frame for each camera 410 provided in vehicle 400 and captured at approximately the same time.

Visual perception task in the context of the present disclosure refers to detecting one or more 3D bounding boxes and a corresponding object class out of a plurality of object classes within sets of automotive sensor data 210₁ to 210ₙ captured by one or more automotive sensors 410. The visual perception task may for example identify within sets of automotive sensor data 210₁ to 210ₙ whether vehicle 400 is located on a controlled-access highway, a limited-access road, an arterial road, a local road or a parking lot. In this example, the plurality of object classes may include the types of road on which vehicle 400 may be located. Further, the object instance detection and classification may e.g. identify within sets of automotive sensor data 210₁ to 210ₙ other vehicles and the type of vehicle, road surface markings and the type of road surface marking, road signs and the type of road sign, vulnerable road users (VRUs) as well as traffic lights and the indication states of the traffic lights. Accordingly, the plurality of object classes may include any possible road user, road traffic control device and road surface marking as well as any other type of element encounterable in the driving environment of the vehicle 400 relevant for enabling the performance of at least one driving automation system feature. Thus, the visual perception task may implement any perception task which determines objects and the classes thereof in the vicinity of vehicle 400, with the objects referring to both a determination of the general environment of vehicle 400 as well as a determination of individual elements in the vicinity of vehicle 400.

It will accordingly be understood that object classification in the context of the present disclosure may identify the classes of multiple object instances within sets of automotive sensor data 210₁ to 210ᵢ and is not limited to the identification of a single object class within sets of automotive sensor data 210₁ to 210ᵢ. Similarly, it will be understood that object instance detection in the context of the present disclosure refers to identifying individual objects within sets of automotive sensor data, such as a VRU, a vehicle or a traffic light. However, each object instance is merely indicative of the presence and the location of an object within automotive sensor data and not of the object class. Thus, each object instance indicates a position within and the data points of sets of automotive sensor data 210₁ to 210ₙ, which together form an object.

Each object instance and more precisely the data points of each set of automotive sensor data 210₁ to 210ᵢ corresponding to each object instance are enclosed in a bounding box, i.e. a 3D bounding box. Likewise, and as will be discussed in more detail below, each object instance within each automotive camera frame 211₁ to 211, may be enclosed in a bounding box, i.e. a 2D bounding box. Accordingly, the expressions bounding box and object instance may be used interchangeably throughout the present disclosure. The visual perception task thus includes determining bounding boxes of object instances.

The automotive vision system may be any kind of machine learning algorithm which has been trained based on training sets of automotive sensor data to classify objects in the driving environment of vehicle 400, i.e. which has been trained to perform a visual perception task as defined above. Training automotive sensor data may be unlabeled, partially labeled or fully labeled. In other words, the training automotive sensor data may include the corresponding object classes in addition to the sets of automotive sensor data. However, given the active learning functionality discussed in detail below, the training automotive sensor data need not be fully labeled.

The visual perception task may be performed by automotive vision system 220 as illustrated in Fig. 2. It will however be understood that automotive vision system 220 may be implemented in any manner configured to determine bounding boxes and corresponding object classes based on sets of automotive sensor data 210₁ to 210ₙ. In the example of Fig. 2, automotive vision system 220 may include input encoder 221, object instance decoder 222 and object class decoder 223.

Input encoder 221 may be configured to encode each set of automotive sensor data 211₁ to 211ᵢ in order to provide a representation of each set of automotive sensor data 211₁ to 211ᵢ for the subsequent determination of one or more bounding boxes and a corresponding object class. Accordingly, input encoder 221 may, together with object instance decoder 222 and object class decoder 223, form an object classifier and an instance detector. Input encoder 221 may be implemented using any kind of machine learning algorithm, such as a convoluted neural network (cNN) or a data clustering algorithm.

Object class decoder 223 may be coupled to input encoder 221. Object class decoder 223 may be configured to determine a first plurality of class probabilities, with each class probability indicating for one or more data points of each set of automotive sensor data 210₁ to 210ᵢ the probability of the one or more data points being indicative of a corresponding object class of a first plurality of object classes. Each object class of the first plurality of object classes may correspond to an object type encounterable in a driving environment of vehicle 400. Taking an object classifier configured to identify 100 different object classes as an example, the first plurality of class probabilities in this example includes 100 class probabilities with each class probability indicating, for a given data point within the automotive sensor data, the probability of the given data point being indicative of each of the 100 object classes. It will be understood that object class decoder 223 may be able to identify any number of object classes, such as 10,000 or 10, depending on the type of object classification the object classifier is designed to perform within the context of the object class determination required to implement the at least one driving automation system feature of vehicle 400. Based on the highest class probability out of the first plurality of class probabilities determined for the one or more data points of each set of automotive sensor data 210₁ to 210ₙ, object class decoder 223 may determine the one or more data points of each set of automotive sensor data 210₁ to 210ₙ as being indicative of the object class corresponding to the highest class probability.

In Fig. 2, the first plurality of class probabilities is illustrated by output vector o of object class decoder 223. In the example of Fig. 2, object class decoder is configured to detect k classes. The one or more object classes detected within each set of automotive sensor data 210₁ to 211ₙ are illustrated in Fig. 2 by detected object classes 240₁ to 240₁. That is, in the example of Fig. 2 object class decoder 223 detects I object classes 240 within example set of automotive sensor data 210₁.

Object class decoder 223 may be implemented as a neural network configured to perform the determination of the object classes with a plurality of activation levels of an output layer of the neural network corresponding to the plurality of class probabilities and thus to output vector o shown in Fig. 2.

Instance decoder 222 is coupled to input encoder 221. Instance decoder 222 is configured to detect within each set of automotive sensor data 210₁ to 210ₙ one or more object instances and their corresponding 3D bounding boxes 230₁ to 230ₗ based on the output of input encoder 221. Each object instance corresponds to an object in the driving environment of vehicle 400 as enclosed by the corresponding bounding box.

Each 3D bounding box 230₁ to 230ₗ includes one or more data points of a corresponding set of automotive sensor data 210₁ to 210ₙ, which are deemed by instance decoder 222 to belong to a single object instance. Since the sets of automotive sensor data 210₁ to 210ₙ include three-dimensional data, each 3D bounding box 230₁ to 230ₗ is a three-dimensional bounding box as each 3D bounding box 230₁ to 230ₗ encloses three-dimensional data.

Instance decoder 222 may be implemented based on any type of machine learning algorithm suitable for object instance detection and bounding box determination. To ensure interoperability, instance decoder 222 may be implemented similarly to input encoder 221 and object class decoder 223.

It will be understood that object class decoder 223 detects one object class 240₁ to 240ₗ per 3D bounding box 230₁ to 230ₗ, as indicated in Fig. 2 by the identical index I of object classes 240₁ to 240ₗ and 3D bounding boxes 230₁ to 230ₗ. In other words, object class decoder 223 determines for each 3D bounding box 230₁ to 230ₗ a corresponding class based on the highest class probability out of the first plurality of class probabilities.

In some examples of the present disclosure, instance decoder 222 may also be coupled between input encoder 221 and object class decoder 223 (not shown in Fig. 2). That is, in some examples of the present disclosure object class decoder 223 may perform object class determination for each 3D bounding box 230₁ to 230ₗ, i.e. based on the one or more data points of the corresponding set of automotive sensor data 210₁ to 210ₙ included in each object instance detected by instance decoder 222. In other words, automotive vision system 220 may also sequentially determine 3D bounding boxes 230₁ to 230ₗ and object classes 240₁ to 240ₗ based on automotive sensor data 210₁ to 210ₙ instead of the parallel determination of 3D bounding boxes 230₁ to 230ₗ and object classes 240₁ to 240ₗ shown in Fig. 2.

In step 110, method 100 determines one or more 3D bounding boxes 230₁-230ₗ and a corresponding object class 240₁ to 240ₗ of a first plurality of object classes for each bounding box 230₁ to 230ₗ for one or more data points within a set of automotive sensor data 210₁ to 210ₙ using automotive vision system 220. That is, method 100 uses automotive sensor data captured at approximately the same time by one or more automotive sensors 410, including one or more automotive cameras, to determine 3D bounding boxes 230₁ to 230ₗ and corresponding object classes 240₁ to 240ₗ, i.e. one 3D bounding box and one object class per object detected by automotive vision system 220 in the corresponding set of automotive sensor data. Accordingly, the determination of one or more bounding boxes 230₁ to 230ₗ and corresponding object classes 240₁ to 240ₗ takes into account any kind of three-dimensional automotive sensor data including one or more automotive camera frames while the oracle may later be provided only with the corresponding at least one automotive camera frame 211₁ to 211ₙ, i.e. two-dimensional data, as will be discussed in more detail below.

In step 120, method 100 determines one or more 2D bounding box vectors b₁-bₘ for each automotive camera frame 211₁-211ₙ using a secondary vision system, such as secondary vision system 310 of Fig. 3. Each 2D bounding box vector b₁-bₘ, is indicative of a 2D bounding box within a corresponding automotive camera frame 211₁-211ₙ and a corresponding object class of a second plurality of object classes. That is, while method 100 determines 3D bounding boxes 230₁-230ₗ and their corresponding object classes in step 110 within sets of automotive sensor data 210₁-210ₙ, method 100 in step 120 determines 2D bounding boxes and their corresponding object classes within automotive camera frames 211₁-211ₙ, i.e. only the two-dimensional data included in sets of automotive sensor data 210₁-210ₙ.

Since each automotive camera frame 211₁-211ₙ may include multiple objects, method 100 may in step 120 determine multiple 2D bounding box vectors b₁-bₘ, i.e. one per object detected in the corresponding automotive camera frame 211₁-211ₙ by secondary automotive vision system 310.

Secondary vision system 310 may be any kind of machine learning algorithm configured to determine 2D bounding boxes and corresponding object classes in automotive camera frames 211₁-211ₙ and to output 2D bounding box vectors b₁-bₘ, including these parameters, such as a region-based convolutional neural network (R-CNN) or single shot detection (SSD) using a single deep neural network. To illustrate the general principle of secondary vision system 310, secondary vision system 310 is shown in Fig. 3 as including a secondary encoder 311 and a secondary decoder 312. Secondary encoder 311 may be configured to generate a latent space representation of a given automotive camera frame 211₁-211ₙ. Secondary decoder 312, may be configured to determine one or more 2D bounding boxes and their corresponding object classes and to thereby generate one or more 2D bounding box vectors b₁-bₘ. It will be understood that secondary vision system 310 may include different elements than shown in Fig. 3, e.g. a further decoder in case of an R-CNN.

Secondary vision system 310 is configured to determine an object class out of the second plurality of object classes mentioned above for each 2D bounding box in automotive camera frames 211₁-211ₙ. The second plurality of object classes may be selected in order to determine a focus of the active learning, i.e. the automotive camera frame selection for training automotive vision system 220. As discussed above, automotive vision system 300 is configured to determine an object class out of the first plurality of object classes for each 3D bounding box in automotive camera frames 210₁-210ₙ. The first plurality of object classes may typically include objects relevant to the driving environment of vehicle 400, such as other vehicles, lane markings and traffic signs, and relevant to differentiating between objects relevant to the driving environment of vehicle 400 and not relevant thereto, such as roadside vegetation or billboards. The second plurality of object classes may include the same objects as the first plurality of object classes in order to provide an active learning approach with a general focus. The second plurality of object classes may include a subset of the first plurality of classes in order to focus the active learning selection on a specific subset of the first plurality of classes. For example, the second plurality of classes may only include traffic signs and billboards in order to focus the active learning selection on the differentiation between these two object classes. For example, the second plurality of classes may only include traffic signs and lane markings and other classes of traffic rule indicators in order to focus the active learning selection on the identification of traffic rule indications. For example, the second plurality of classes may include a more fine-grained differentiation between different types of an object class of the first plurality of object classes in order to focus the active learning selection on potential weak spots of automotive vision system 220 which may not be apparent when focusing on the more general object class of the first plurality of object classes. Using vulnerable road users (VRUs) as an example, the first plurality of object classes may only include the object class VRU. By contrast, the second plurality of object classes may include different types of VRUs, such as pedestrians of various ages, cyclists and wheelchair users. In this example, the second plurality of object classes may focus the active learning selection on types of VRUs which automotive vision system 220 may have issues to identify which are not immediately noticeable when looking at the overall detection of VRUs.

Since the determination of the one or more 2D bounding box vectors b₁-bₘ, in step 120 is independent of the visual perception task performed by automotive vision system 220 in step 110, steps 110 and 120 may be performed concurrently.

Method 100 may include a step 130, in which method 100 may additionally determine a semantic embedding vector e₁-eₚ for one or more 2D bounding box vectors b₁-bₘ determined in step 120 and/or for each automotive camera frame 211₁-211ₙ using a semantic embedding encoder, such as semantic embedding encoder 320 of Fig. 3. Each semantic embedding vector e₁-eₚ may be indicative of a semantic representation of the corresponding 2D bounding box or the corresponding automotive camera frame 211₁-211ₙ with the semantic representation being indicative of an object class of a third plurality of object classes. More precisely, method 100 may employ in step 130 semantic embedding encoder 320 in order to generate a feature representation of one or more 2D bounding box vectors b₁-bₘ, and/or for each automotive camera frame 211₁-211ₙ, i.e. semantic embedding vectors e₁-eₚ. Semantic embedding encoder 320 may have been trained to generate feature representations of image data, such as automotive camera frames 211₁-211ₙ, which align with feature representations of textual, i.e. semantic, descriptions of the objects of the third plurality of object classes. Accordingly, each semantic embedding vector e₁-eₚ may be indicative of a semantic representation of a given object class of the third plurality of object classes determined within a given 2D bounding box and/or automotive camera frame 211₁-211ₙ due to the training of semantic embedding encoder 320.

In other words, the third plurality of object classes provides for each object class of the third plurality of object classes a text description of each object class of the third plurality of object classes, which is used during training to of semantic embedding encoder 320 to ensure alignment of the generation of image feature representation with the text feature representations of each object class of the third plurality of object classes. Semantic representation in the context of the present disclosure is thus to be understood to refer to a vector representation of 2D bounding box vectors b₁-bₘ, and/or of automotive camera frames 211₁-211ₙ which is based on a text description of an object class of the corresponding 2D bounding box and/or automotive camera frame 211₁-211ₙ.

The third plurality of object classes may include a higher number of object classes compared to the first plurality and the second plurality of object classes. That is, in implementations of method 100 which implement step 130 in addition to step 120, semantic embedding encoder 320 may be used in order to provide a more fine-grained object detection and thereby a more fine-grained active learning selection of automotive camera frames 211₁-211ₙ. The more fine-grained active learning selection of automotive camera frames 211₁-211ₙ enabled by semantic embedding encoder 320 may be used to further identify potential weak spots in the object detection and classification performed by automotive vision system 220 and to thereby improve the performance of the visual perception tasks performed by automotive vision system 220, on which the safe performance of one or more driving automation system features of vehicle 400 depends.

It will be understood that semantic embedding encoder 320 may be used in step 130 to determine a corresponding semantic embedding vector e₁-eₚ at for each bounding box vector b₁-bₘ, i.e. the image data within each bounding box indicated by each 2D bounding box vector b₁-bₘ, for each automotive camera frame 211₁-211ₙ or for both each bounding box vector b₁-bₘ, and each automotive camera frame 211₁-211ₙ.

In step 140, method 100 calculates a frame score for each automotive camera frame 211₁-211ₙ based at least on the one or more 2D bounding box vectors b₁-bₘ determined in step 120. In implementations of method 100 which also implement step 130, method 100 may further calculate a frame score for each automotive camera frame 211₁-211ₙ based on the corresponding semantic embedding vectors e₁-e_{P}. Each frame score of a given automotive camera frame 211₁-211ₙ may then be used to select a given automotive camera frame 211₁-211ₙ for annotation by an oracle.

Each frame score of a given automotive camera frame 211₁-211ₙ may be calculated in any manner suitable to identify object classifications by secondary vision system 310 and optionally by semantic embedding encoder 320 which deviate from other object classifications by secondary vision system 310 and optionally by semantic embedding encoder 320 on the corresponding vectors determined in step 120 and optionally in step 130. To this end, step 140 may include any one of the following steps 141 to 149. As can be seen in Fig. 1A, steps 141 to 144 may be performed to calculate a frame score of a given automotive camera frame 211₁-211ₙ based on 2D bounding box vectors b₁-bₘ, while steps 145 to 148 may be performed to calculate a frame score of a given automotive camera frame 211₁-211ₙ based on semantic embedding vectors e₁-eₚ. Since the calculation may be similar in both cases, steps 141 to 144 based on 2D bounding box vectors b₁-bₘ, will be explained in detail below and it will be understood that steps 145 to 148 based on semantic embedding vectors e₁-eₚ may be performed similarly.

Steps 141 to 149 may determine various specific frame scores, such as rarity, diversity or distance scores for a given 2D bounding box vector b₁-bₘ, and/or a given automotive camera frame 211₁-211ₙ, as well as uncertainty scores of automotive vision system 220 and the secondary vision system 310. Consequently, steps 141 to 149 may yield a plurality of scores for a given frame. In order to determine an overall frame score for a given automotive camera frame, the various scores may be aggregated, i.e. may be combined, in a way to provide an overall frame score for a given automotive camera frame 211₁-211ₙ, such as by selecting a maximum score determined by steps 141 to 149 or by averaging all scores determined by steps 141 to 149. It will be understood that the various scores determined in steps 141 to 149 as well as any additional scores suitable to assess whether a given automotive camera frame 211₁-211ₙ should be annotated may be aggregated in any other way suitable in order to obtain an overall frame score for a given automotive camera frame 211₁-211ₙ.

It will further be understood that in the case of steps 141 to 144, a given score, such as a bounding box rarity score, a bounding box diversity score and a cluster distance score, may be calculated for each 2D bounding box vector b₁-bₘ. To reference these scores to a corresponding automotive camera frame 211₁-211ₙ, these scores may be aggregated in the sense discussed above in order to respectively calculate an aggregated bounding box rarity score, an aggregated bounding box diversity score and an aggregated cluster distance score for a given automotive camera frame 211₁-211ₙ.

In step 141, method 100 may calculate a bounding box rarity score for each 2D bounding box vector b₁-bₘ. Each bounding box rarity score may be indicative of a detection probability of a rare object class exceeding a rarity threshold. In this context, a rare object class is to be understood as an object class of the second plurality of object classes which has been detected less often than other object classes of the second plurality of object classes. For example, an object class may be considered to be a rare object class if the average detection probability of the object lass is one or more than one standard deviation below the average detection probability of the object classes of the second plurality of object classes. Further, an object class may also be considered to be a rare object class if the average detection probability of the object class ranks at or close to the bottom when ranking all average detection probabilities of the object classes of the second plurality of object classes. The rarity threshold may denote a detection probability of a rare object class above which annotation of a given automotive camera frame 211₁-211ₙ may be considered in order to verify whether a given automotive camera frame 211₁-211ₙ indeed shows an instance of a rare object class.

Analogously to step 141, method 100 may in step 145 calculate an embedding rarity score for each semantic embedding vector e₁-eₚ. The semantic embedding rarity score may be indicative of a detection probability of a rare embedding object class exceeding an embedding rarity threshold. In this context, a rare embedding object class may be an object class of the third plurality of object classes which has been detected less often than other object classes of the third plurality of object classes.

In step 142, method 100 may assign each 2D bounding box vector b₁-bₘ, to a corresponding bounding box cluster out of a plurality of bounding box clusters determined during training of secondary vision system 310. That is, during training of secondary vision system 310, all 2D bounding box vectors determined during the training are clustered based on their corresponding object class of the second plurality of object classes. The 2D bounding box vectors may be clustered during training based on any approach to clustering vectors, such as k-means clustering. During performance of step 142, each 2D bounding box vector b₁-bₘ, may be assigned to the corresponding bounding box cluster based on the object class of each 2D bounding box vector b₁-bₘ. Based on the cluster assignment, method 100 may proceed to step 143 and/or step 144, as indicated in Fig. 1A by the arrows at the right-hand side of steps 143 and 144.

In step 143, method 100 may calculate a bounding box diversity score for each 2D bounding box vector based on a number of 2D bounding box vectors previously assigned to the corresponding bounding box cluster relative to all previous 2D bounding box vectors. That is, the bounding box diversity score may correspond to the percentage of all previous 2D bounding box vectors which are assigned to a bounding box cluster of a given 2D bounding box vector b₁-bₘ.

In step 144, method 100 may calculate a cluster distance score for each 2D bounding box vector b₁-bₘ, based on a distance between a given 2D bounding box vector b₁-bₘ, and a closest 2D bounding box vector previously assigned to the corresponding bounding box cluster. That is, the cluster distance score may be indicative of a distance between a given 2D bounding box vector b₁-bₘ, and the closest 2D bounding box vector previously assigned to the same 2D bounding box cluster.

Analogously to steps 142 to 144, method 100 may perform the same calculations for each semantic embedding vector e₁-eₚ. Accordingly, method 100 may in step 146 assign each semantic embedding vector e₁-eₚ to a corresponding semantic embedding cluster out of a plurality of semantic embedding clusters determined during training of the semantic embedding encoder. Based on this assignment, method 100 may proceed to step 147 and/or step 148. In step 147, method 100 may calculate an embedding diversity score for each semantic embedding vector e₁-eₚ based on a number of semantic embedding vectors previously assigned to the corresponding semantic embedding cluster relative to all previous semantic embedding vectors. In step 148, method 148 may calculate an embedding distance score for each semantic embedding vector e₁-eₚ based on a distance between a given semantic embedding vector and a closest semantic embedding vector previously assigned to the corresponding embedding cluster.

Finally, method 100 may in step 149 calculate an uncertainty score for at least one of automotive vision system 220 and secondary vision system 310. The uncertainty score may be indicative of an uncertainty of the object class determination the respective vision system and may e.g. be calculated based on a Dirichlet distribution of the activation values of the output layer of automotive vision system 220 and/or secondary vision system 310 or any other manner suitable to determine an uncertainty of an object classification performed by a machine learning algorithm.

In Fig. 3, steps 141 to 149 are illustrated by frame score calculation 330, which includes cluster evaluation 331, rarity determination 332 and uncertainty determination 333. That is, frame score calculation 330 illustrates step 140. Cluster evaluation 331 illustrates steps 142 to 144 and corresponding steps 146 to 148. Rarity determination 332 illustrates steps 141 and 145. Uncertainty determination illustrates step 149.

As discussed above, method 100 may in step 140 calculate any of the frame scores discussed with regard to steps 141 to 149 and may aggregate them in case of scores based on 2D bounding box vectors b₁-bₘ to reference them to an automotive camera frame 211₁-211ₙ and in case of multiple frame scores for one automotive camera frame 211₁-211ₙ to calculate an overall frame score.

It will be understood that the various frame scores discussed with regard to steps 141 to 149 are merely provided as examples. Method 100 may calculate additional or different frame scores in step 140 in order to provide a frame score based at least on the one or more 2D bounding box vectors b₁-bₘ for a given automotive camera frame 211₁-211ₙ in order to enable selection of one or more of automotive camera frames 211₁-211ₙ for active learning in order to improve automotive vision system 220 and thereby the performance of the one or more driving automation system features.

In step 150, method 100 may provide one or more automotive camera frames 211₁-211ₙ to oracle 340 based on the corresponding frame scores calculated in step 140. Method 100 may in step 150 select one or more automotive camera frames 211₁-211ₙ for provision to the oracle based on any suitable evaluation of the frame score determined in step 140. Method 100 may for example in a step 151 select at least one automotive camera frame 211₁-211ₙ based on the corresponding frame score exceeding a selection threshold or based on the corresponding frame score exceeding a selection percentile.

In order to provide oracle 340 with more situational awareness of the driving environment of vehicle 400, method 100 may additionally include a step 152, in which method 100 may provide at least one preceding automotive camera frame 211₁-211ₙ and at least one succeeding automotive camera frame 211₁-211ₙ in addition to the automotive camera frame 211₁-211ₙ provided to oracle 340 in step 150. Based on the situational awareness, oracle 340 may be enabled to provide a more accurate annotation of the corresponding automotive camera frame 211₁-211ₙ.

Oracle 340 may be a cloud-based object classification service or may be a user of vehicle 400. In the latter case, method 100 may include a step of displaying, the one or more automotive camera frames 211₁-211ₙ provided to oracle 340 in step 150 on a display.

Finally, method 100 receives an object annotation 341 of the one or more automotive camera frames from oracle 340 in step 160. Object annotation 341 is configured to enable retraining of automotive vision system 220, i.e. to enable improving the performance of the one or more visual perception tasks and thus of the one or more driving automation system features, thereby enhancing the safety of the at least partial driving automation of vehicle 400. The fact that object annotation 341 is configured to enable retraining automotive vision system 220 is illustrated in Fig. 3 by the arrow pointing from object annotation 341 to automotive vision system 220.

It will be understood that the preceding steps may performed in their entirety by automotive control unit 500 discussed in the following. However, the performance of semantic embedding encoder 320, i.e. the determination of semantic embedding vectors e₁-eₚ, and the corresponding frame score calculation in steps 140 to 149 may also be performed by a data center processing unit, such as data center processing unit 600 discussed in the following. That is, vehicle 400 may provide at least some automotive camera frames 211₁-211ₙ to a data center for the performance of step 130 and step 140 to 149 based on semantic embedding vectors e₁-eₚ. In some examples of the present disclosure, also the entirety of steps 120 to 160 may be performed by a data center, in which case method 100 may be modified by replacing step 110 as discussed above with a step of receiving automotive camera frames 211₁-211ₙ. In such an example of the present disclosure, method 100 may include retraining automotive vision system 220 at a data center and providing retrained automotive vision system 220 to vehicle 400, e.g. as part of an over the air (OTA) update or during manufacture of vehicle 400.

Fig. 5 shows automotive control unit 500 configured to perform method 100. Automotive control unit 500 may include a processor 510, a graphics processing unit (GPU) 520, automotive processing system 530, a memory 540, a removable storage 550, a storage 560, a cellular interface 570, a global navigation satellite system (GNSS) interface 580 and a communication interface 590.

Processor 510 may be any kind of single-core or multi-core processing unit employing a reduced instruction set (RISC) or a complex instruction set (CISC). Exemplary RISC processing units include ARM based cores or RISC V based cores. Exemplary CISC processing units include x86 based cores or x86-64 based cores. Processor 510 may perform instructions causing automotive control unit 500 to perform method 100. Processor 510 may be directly coupled to any of the components of automotive control unit 500 or may be directly coupled to memory 530, GPU 520 and device bus 500B.

GPU 520 may be any kind of processing unit optimized for processing graphics related instructions or more generally for parallel processing of instructions. As such, GPU 520 may be configured to generate a display of information, such as information relating to one or more driving automation system features or telemetry data, to a driver of the vehicle, e.g. via a head-up display (HUD) or a display arranged within the view of the driver. GPU 520 may be coupled to the HUD and/or the display via connection 520C. GPU 520 may further perform at least a part of method 100 to enable fast parallel processing of instructions relating to method 100. It should be noted that in some embodiments, processor 510 may determine that GPU 520 need not perform instructions relating to method 100. GPU 520 may be directly coupled to any of the components of automotive control unit 500 or may be directly coupled to processor 510 and memory 530. In some embodiments, GPU 520 may also be coupled to the device bus.

Automotive processing system 530 may be any kind of system-on chip configured to provide trillions of operations per second (TOPS) in order to enable automotive control unit 500 to perform one or more driving automation system features as well as automotive vision system 220 while driving. Automotive processing system 530 may only interface with processor 510 or may interface with other devices via the system bus.

Memory 540 may be any kind of fast storage enabling processor 510, GPU 520 and automotive processing system 530 to store instructions for fast retrieval during processing of instructions as well as to cache and buffer data. Memory 540 may be a unified memory coupled to processor 510 and GPU 520 and automotive processing system 530 in order to enable allocation of memory 540 to processor 510, GPU 520 and automotive processing system 530 as needed. Alternatively, processor 510, GPU 520 and automotive processing system 530 may be coupled to separate processor memory 540a, GPU memory 540b and automotive processing system memory 540c.

Removable storage 550 may be a storage device which can be removably coupled with automotive control unit 500. Examples include a digital versatile disc (DVD), a compact disc (CD), a Universal Serial Bus (USB) storage device, such as an external SSD, or a magnetic tape. It should be noted that removable storage 550 may store data, such as instructions of method 100 and/or sets of automotive sensor data 210₁-210ₙ and automotive camera frames 211₁-211ₙ, or may be omitted.

Storage 560 may be a storage device enabling storage of program instructions and other data. For example, storage 560 may be a hard disk drive (HDD), a solid state disk (SSD) or some other type of nonvolatile memory. Storage 560 may for example store the instructions of method 100.

Removable Storage 550 and storage 560 may be coupled to processor 510 via system bus 500B. System bus 500B may be any kind of bus system enabling processor 510 and optionally GPU 520 as well as automotive processing system 530 to communicate with the other devices of automotive control unit 500. The system bus may for example be a Peripheral Component Interconnect express (PCIe) bus or a Serial AT Attachment (SATA) bus.

Cellular interface 570 may be any kind of interface enabling automotive control unit 500 to communicate via a cellular network, such as a 4G network or a 5G network.

GNSS interface 580 may be any kind of interface enabling automotive control unit 500 to receive position data provided by a satellite network, such as the Global Positioning System (GPS), the Global Navigation Satellite System (GLONASS) or Galileo.

Communications interface 590 may enable automotive control unit 500 to interface with external devices, either directly or via network, via a connection as illustrated by the line coupling communications interface 590 to the outside of automotive control unit 500. Communications interface 590 may for example enable automotive control unit 500 to couple to a wired or wireless network, such as Ethernet, Wifi, a Controller Area Network (CAN) bus or any bus system appropriate in vehicles. For example, automotive control unit 500 may be coupled to the one or more automotive sensors 410 to receive information about the environment of vehicle 400 in order to classify objects in the vicinity of vehicle 400. Communications interface 590 may also include a USB port or a serial port to enable direct communication with an external device.

Automotive control unit 500 may be integrated with vehicle 400, e.g. beneath the cabin, under the dashboard or in the trunk of vehicle 400.

Fig. 6 shows data center processing unit 600 configured to perform at least parts of method 100 in some examples of the present disclosure, as discussed above. Data center processing unit 600 may include a processor 610, a graphics processing unit (GPU) 620, a memory 640, a removable storage 650, a storage 660 and a communication interface 690. It will be understood that these elements may substantially correspond to processor 510, GPU 520, memory 540, removable storage 550, storage 560 and communication interface 590 of automotive control unit 500 adapted to the requirements of data center processing. For example, processor 610 may be a server grade multi-core processor configured to provide increased processing power compared with processor 510 located in vehicle 400. Likewise, memory 640 may be bigger in size than and comprise memory architectures different from memory 540 in order to comply with data center memory requirements. GPU 620 may be solely present in data center processing unit 600 to provide fast processing of multiple instructions of method 100 in parallel, such as instructions relating to semantic embedding encoder 320, and may not be used to generate any kind of display, as data center processing unit 600 may only be accessed remotely via communications interface 690 and may thus not need to directly generate any kind of display.

It will be understood that both automotive control unit 500 and data center processing unit 600 may include further or fewer elements than shown in Figs. 5 and 6, as required by their actual implementations and in particular in view of the processing power requirements of method 100, automotive vision system 220, secondary vision system 310, semantic embedding encoder 320 and the one or more driving automation system features. Further, the above discussed elements may be distributed across multiple (sub) units.

The invention may further be illustrated by the following examples.

In an example a method configured to enable active learning for object classification by an automotive vision system configured to perform visual perception tasks in a vehicle configured to perform at least one driving automation system feature based on the object classification, comprises: determining, using the automotive vision system, for one or more data points within a set of automotive sensor data, including at least one automotive camera frame, one or more 3D bounding boxes and a corresponding object class of a first plurality of object classes for each 3D bounding box, determining, for each automotive camera frame, one or more 2D bounding box vectors using a secondary vision system, each 2D bounding box vector being indicative of a 2D bounding box within a corresponding automotive camera frame and a corresponding object class of a second plurality of object classes of the 2D bounding box, calculating, for each automotive camera frame, a frame score based at least on the one or more 2D bounding box vectors, providing one or more automotive camera frames to an oracle based on the corresponding frame scores, and receiving, from the oracle, an object annotation of the one or more automotive camera frames, the object annotation being configured to enable retraining of the automotive vision system.

In the example method, the calculating the frame score may comprise calculating, for each 2D bounding box vector, a bounding box rarity score, each bounding box rarity score being indicative of a detection probability of a rare object class exceeding a rarity threshold, wherein a rare object class may be an object class of the second plurality of object classes which has been detected less often than other object classes of the second plurality of object classes, wherein the frame score may comprise an aggregated bounding box rarity score including an aggregation of all bounding box rarity scores calculated for a corresponding automotive camera frame.

In the example method, the calculating the frame score comprises: assigning each 2D bounding box vector to a corresponding bounding box cluster out of a plurality of bounding box clusters determined during training of the secondary vision system; and calculating, for each 2D bounding box vector, a bounding box diversity score based on a number of 2D bounding box vectors previously assigned to the corresponding bounding box cluster relative to all previous 2D bounding box vectors, wherein the frame score comprises an aggregated bounding box diversity score including an aggregation of the bounding box diversity scores calculated for a corresponding automotive camera frame.

In the example method, the calculating the frame score may comprise assigning each 2D bounding box vector to a corresponding bounding box cluster out of a plurality of bounding box clusters determined during training of the secondary vision system and calculating, for each 2D bounding box vector, a cluster distance score based on a distance between a given 2D bounding box vector and a closest 2D bounding box vector previously assigned to the corresponding bounding box cluster, wherein the frame score may comprise an aggregated cluster distance score including an aggregation of the cluster distance scores calculated for a corresponding automotive camera frame.

The example method may further comprise determining, for the one or more 2D bounding box vectors and/or each automotive camera frame, a corresponding semantic embedding vector using a semantic embedding encoder, each semantic embedding vector being indicative of a semantic representation of the corresponding 2D bounding box or of the corresponding automotive camera frame, respectively. The semantic representation may be indicative of an object class of a third plurality of object classes, wherein the calculating the frame score may further be further based on the semantic embedding vectors.

In the example method, the calculating the frame score may comprise calculating, for each semantic embedding vector, an embedding rarity score, the semantic embedding rarity score being indicative of a detection probability of a rare embedding object class exceeding an embedding rarity threshold, wherein a rare embedding object class may be an object class of the third plurality of object classes which may have been detected less often than other object classes of the third plurality of object classes, wherein the frame score may comprise an aggregated embedding rarity score including all embedding rarity scores calculated for a corresponding automotive camera frame.

In the example method, the calculating the frame score may comprise assigning each semantic embedding vector to a corresponding semantic embedding cluster out of a plurality of semantic embedding clusters determined during training of the semantic embedding encoder and calculating, for each semantic embedding vector, an embedding diversity score based on a number of semantic embedding vectors previously assigned to the corresponding semantic embedding cluster relative to all previous semantic embedding vectors, wherein the frame score may comprise an aggregated embedding diversity score including the embedding diversity scores calculated for a corresponding automotive camera frame.

In the example method, the calculating the frame score may comprise assigning each semantic embedding vector to a corresponding semantic embedding cluster out of a plurality of semantic embedding clusters determined during training of the semantic embedding encoder and calculating, for each semantic embedding vector, an embedding distance score based on a distance between a given semantic embedding vector and a closest semantic embedding vector previously assigned to the corresponding embedding cluster, wherein the frame score may comprise an aggregated embedding cluster distance score including the embedding cluster distance scores calculated for a corresponding automotive camera frame.

In the example method, the calculating the frame score may comprise calculating, for at least one of the automotive vision system and the secondary vision system, an uncertainty score indicative of an uncertainty of the object class determination of at least one of the automotive vision system and the secondary vision system, wherein the frame score comprises the uncertainty score.

In the example method, the providing of one or more automotive camera frames may include selecting at least one automotive camera frame based on one of the corresponding frame score exceeding a selection threshold or the corresponding frame score exceeding a selection percentile.

In the example method, the providing of one or more automotive camera frames may further include providing, for each selected automotive camera frame, at least one preceding automotive camera frame and at least one succeeding automotive camera frame in addition to the corresponding selected automotive camera frame to the oracle.

In the example method, the oracle may be a cloud-based object classification service a user of the vehicle and the providing of one or more automotive camera frames may further include displaying, on a display of the vehicle, the one or more automotive camera frames.

In an example, an automotive control unit comprises at least one processing unit and a memory coupled to the at least one processing unit and configured to store machine-readable instructions, wherein the machine-readable instructions cause the at least one processing unit to: determine, using the automotive vision system, for one or more data points within a set of automotive sensor data, including at least one automotive camera frame, one or more 3D bounding boxes and a corresponding object class of a first plurality of object classes for each 3D bounding box, determine, for each automotive camera frame, one or more 2D bounding box vectors using a secondary vision system, each 2D bounding box vector being indicative of a 2D bounding box within a corresponding automotive camera frame and a corresponding object class of a second plurality of object classes of the 2D bounding box, calculate, for each automotive camera frame, a frame score based at least on the one or more 2D bounding box vectors, provide one or more automotive camera frames to an oracle based on the corresponding frame scores, and receive, from the oracle, an object annotation of the one or more automotive camera frames, the object annotation being configured to enable retraining of the automotive vision system.

In the example automotive control unit, the machine-readable instructions further cause the at least one processing unit to perform the method of any one of the above example methods.

In an example, a vehicle comprises the above example automotive control unit.

The preceding description has been provided to illustrate a method and a system for determining the reliability of object instance detection and object classification in an at least partially automated vehicle. It should be understood that the description is in no way meant to limit the scope of the present disclosure to the precise embodiments discussed throughout the description. Rather, the person skilled in the art will be aware that the examples of the present disclosure may be combined, modified or condensed without departing from the scope of the present disclosure as defined by the following claims.

### List of Reference Signs

- 100 - 160: method and method steps
- 210₁-210ₙ: automotive sensor data
- 211₁ - 211ₙ: automotive camera frames
- 220: automotive vision system
- 221: input encoder
- 222: instance decoder
- 223: object decoder
- o₁ - oₗ: object class probability
- 230₁ - 230ₗ: bounding box
- 240₁ - 240ₗ: object class
- 310: secondary vision system
- 311: secondary encoder
- 312: secondary decoder
- b₁ - bₘ: 2D bounding box vector
- 320: semantic embedding encoder
- e₁ - eₚ: semantic embedding vector
- 330: frame score calculation
- 331: cluster evaluation
- 332: rarity determination
- 333: uncertainty determination
- 340: oracle
- 341: object annotation
- 400: vehicle
- 410: automotive sensor
- 500: automotive control unit
- 500B: bus
- 510: CPU
- 520: GPU
- 520c: connection
- 530: automotive processing system
- 540: memory
- 550: removable storage
- 560: storage
- 570: cellular interface
- 580: GNSS interface
- 590: communications interface
- 600: data center processing unit
- 600B: bus
- 610: CPU
- 620: GPU
- 620c: connection
- 640: memory
- 650: removable storage
- 660: storage
- 690: communications interface

## Claims

1. Method (100) configured to enable active learning for object classification by an automotive vision system (220) configured to perform visual perception tasks in a vehicle (400) configured to perform at least one driving automation system feature based on the object classification, comprising:
determining (110), using the automotive vision system (220), for one or more data points within a set of automotive sensor data (210₁-210ₙ), including at least one automotive camera frame (211₁-211ₙ), one or more 3D bounding boxes and a corresponding object class of a first plurality of object classes for each 3D bounding box;
determining (120), for each automotive camera frame (211₁-211ₙ), one or more 2D bounding box vectors (b₁-bₘ) using a secondary vision system (310), each 2D bounding box vector (b₁-bₘ) being indicative of a 2D bounding box within a corresponding automotive camera frame (211₁-211ₙ) and a corresponding object class of a second plurality of object classes of the 2D bounding box;
calculating (140), for each automotive camera frame (211₁-211ₙ), a frame score based at least on the one or more 2D bounding box vectors (b₁-bₘ);
providing (150) one or more automotive camera frames (211₁-211ₙ) to an oracle (340) based on the corresponding frame scores; and
receiving (160), from the oracle (340), an object annotation (341) of the one or more automotive camera frames (211₁-211ₙ), the object annotation (341) being configured to enable retraining of the automotive vision system (220).

2. The method (100) of claim 1, wherein the calculating (140) the frame score comprises:
Calculating (141), for each 2D bounding box vector (b₁-bₘ), a bounding box rarity score, each bounding box rarity score being indicative of a detection probability of a rare object class exceeding a rarity threshold, wherein a rare object class is an object class of the second plurality of object classes which has been detected less often than other object classes of the second plurality of object classes,
wherein the frame score comprises an aggregated bounding box rarity score including an aggregation of all bounding box rarity scores calculated for a corresponding automotive camera frame (211₁-211ₙ).

3. The method (100) of any one of the preceding claims, wherein the calculating (140) the frame score comprises:
assigning (142) each 2D bounding box vector (b₁-bₘ) to a corresponding bounding box cluster out of a plurality of bounding box clusters determined during training of the secondary vision system (310); and
calculating (143), for each 2D bounding box vector (b₁-bₘ), a bounding box diversity score based on a number of 2D bounding box vectors previously assigned to the corresponding bounding box cluster relative to all previous 2D bounding box vectors,
wherein the frame score comprises an aggregated bounding box diversity score including an aggregation of the bounding box diversity scores calculated for a corresponding automotive camera frame (211₁-211ₙ).

4. The method (100) of any one of the preceding claims, wherein the calculating the frame score comprises:
assigning (142) each 2D bounding box vector (b₁-bₘ) to a corresponding bounding box cluster out of a plurality of bounding box clusters determined during training of the secondary vision system (310); and
calculating (144), for each 2D bounding box vector (b₁-bₘ), a cluster distance score based on a distance between a given 2D bounding box vector (b₁-bₘ) and a closest 2D bounding box vector previously assigned to the corresponding bounding box cluster,
wherein the frame score comprises an aggregated cluster distance score including an aggregation of the cluster distance scores calculated for a corresponding automotive camera frame (211₁-211ₙ).

5. The method (100) of any one of the preceding claims, further comprising:
determining (130), for the one or more 2D bounding box vectors (b₁-bₘ) and/or each automotive camera frame (211₁-211ₙ), a corresponding semantic embedding vector (e₁-eₚ) using a semantic embedding encoder (320), each semantic embedding vector (e₁-eₚ) being indicative of a semantic representation of the corresponding 2D bounding box or the corresponding automotive camera frame (211₁-211ₙ), wherein the semantic representation is indicative of an object class of a third plurality of object classes,
wherein the calculating (140) the frame score is further based on the semantic embedding vectors (e₁-eₚ).

6. The method (100) of claim 5, wherein the calculating (140) the frame score comprises:
calculating (145), for each semantic embedding vector (e₁-eₚ), an embedding rarity score, the semantic embedding rarity score being indicative of a detection probability of a rare embedding object class exceeding an embedding rarity threshold, wherein a rare embedding object class is an object class of the third plurality of object classes which has been detected less often than other object classes of the third plurality of object classes,
wherein the frame score comprises an aggregated embedding rarity score including all embedding rarity scores calculated for a corresponding automotive camera frame (211₁-211ₙ).

7. The method (100) of any one of claims 5 to 6, wherein the calculating (140) the frame score comprises:
assigning (146) each semantic embedding vector (e₁-eₚ) to a corresponding semantic embedding cluster out of a plurality of semantic embedding clusters determined during training of the semantic embedding encoder (320); and
calculating (147), for each semantic embedding vector (e₁-eₚ), an embedding diversity score based on a number of semantic embedding vectors previously assigned to the corresponding semantic embedding cluster relative to all previous semantic embedding vectors,
wherein the frame score comprises an aggregated embedding diversity score including the embedding diversity scores calculated for a corresponding automotive camera frame (211₁-211ₙ).

8. The method (100) of any one of claims 5 to 7, wherein the calculating (140) the frame score comprises:
assigning (146) each semantic embedding vector (e₁-eₚ) to a corresponding semantic embedding cluster out of a plurality of semantic embedding clusters determined during training of the semantic embedding encoder (320); and
calculating (147), for each semantic embedding vector (e₁-eₚ), an embedding distance score based on a distance between a given semantic embedding vector (e₁-eₚ) and a closest semantic embedding vector previously assigned to the corresponding embedding cluster,
wherein the frame score comprises an aggregated embedding cluster distance score including the embedding cluster distance scores calculated for a corresponding automotive camera frame (211₁-211ₙ).

9. The method (100) of any one of the preceding claims, wherein the calculating (140) the frame score comprises:
calculating (149), for at least one of the automotive vision system (220) and the secondary vision system (310), an uncertainty score indicative of an uncertainty of the object class determination of at least one of the automotive vision system (220) and the secondary vision system (310),
wherein the frame score comprises the uncertainty score.

10. The method (100) of any one of the preceding claims, wherein the providing (150) of the one or more automotive camera frames (211₁-211ₙ) includes selecting (151) at least one automotive camera frame (211₁-211ₙ) based on one of the corresponding frame score exceeding a selection threshold or the corresponding frame score exceeding a selection percentile.

11. The method (100) of any one of the preceding claims, wherein the providing (150) of one or more automotive camera frames (211₁-211ₙ) further includes:
providing (152), for each selected automotive camera frame (211₁-211ₙ), at least one preceding automotive camera frame and at least one succeeding automotive camera frame in addition to the corresponding selected automotive camera frame to the oracle (340).

12. The method (100) of any one of the preceding claims, wherein:
the oracle (340) is a cloud-based object classification service, or
the oracle (340) is a user of the vehicle (500) and the providing (150) of one or more automotive camera frames (211₁-211ₙ) further includes displaying, on a display of the vehicle (500), the one or more automotive camera frames (211₁-211ₙ).

13. An automotive control unit (500), comprising:
at least one processing unit (510, 520, 530); and
a memory (540, 550, 560) coupled to the at least one processing unit (510, 520, 530) and configured to store machine-readable instructions, wherein the machine-readable instructions cause the at least one processing unit (510, 520, 530) to:
determine, using an automotive vision system (220), for one or more data points within a set of automotive sensor data (210₁-210ₙ), including at least one automotive camera frame (211₁-211ₙ), one or more 3D bounding boxes and a corresponding object class of a first plurality of object classes for each 3D bounding box;
determine, for each automotive camera frame (211₁-211ₙ), one or more 2D bounding box vectors (b₁-bₘ) using a secondary vision system (310), each 2D bounding box vector (b₁-bₘ) being indicative of a 2D bounding box within a corresponding automotive camera frame (211₁-211ₙ) and a corresponding object class of a second plurality of object classes of the 2D bounding box;
calculate, for each automotive camera frame (211₁-211ₙ), a frame score based at least on the one or more 2D bounding box vectors (b₁-bₘ);
provide one or more automotive camera frames (211₁-211ₙ) to an oracle (340) based on the corresponding frame scores; and
receive, from the oracle (340), an object annotation (341) of the one or more automotive camera frames (211₁-211ₙ), the object annotation (341) being configured to enable retraining of the automotive vision system (220).

14. The automotive control unit (500) of claim 13, wherein the machine-readable instructions further cause the at least one processing unit (510, 520, 530) to perform the method (100) of any one of claims 2 to 12.

15. A vehicle (400) comprising the automotive control unit (500) of any one of claims 13 and 14.
